# EUROPÄISCHE PATENTSCHRIFT

(11) **EP 3 705 738 B1**
(45) Veröffentlichungstag und Bekanntmachung des Hinweises auf die Patenterteilung: **10.05.2023**
(21) Anmeldenummer: 19160522.9
(22) Anmeldetag: 04.03.2019
(51) Int. Cl.: B60Q 1/04, B60Q 1/26, F21S 41/39, F21S 41/47, F21S 45/49

(54) **KUNSTSTOFFTECHNIK-SCHRAUBE-LEICHTMETALL-BAUTEIL-BEFESTIGUNGSSYSTEM UND VERFAHREN ZUM EINSCHRAUBEN VON KUNSTSTOFFTECHNIK-SCHRAUBEN IN LEICHTMETALLE**
PLASTIC-SCREW-LIGHTWEIGHT METAL-COMPONENT-FIXING SYSTEM AND METHOD FOR SCREWING PLASTIC SCREWS INTO LIGHT METALS
SYSTÈME DE FIXATION D'UN COMPOSANT EN MÉTAL LÉGER À L'AIDE D'UNE VIS DE LA TECHNIQUE DES MATIÈRES PLASTIQUES ET PROCÉDÉ DE VISSAGE DES VIS DE LA TECHNIQUE DES MATIÈRES PLASTIQUES DANS LES MÉTAUX LÉGERS

(43) Veröffentlichungstag der Anmeldung: 09.09.2020
(73) Patentinhaber: ZKW Group GmbH, 3250 Wieselburg (AT)
(72) Erfinder: Geyer, Sebastian, 3654 Raxendorf (AT); Sieber, Lukas, 3380 Pöchlarn (AT); Hauer, Clemens, 3261 Steinakirchen am Forst (AT)
(74) Vertreter: Patentanwaltskanzlei Matschnig & Forsthuber OG

(56) Entgegenhaltungen:
- DE-A1-102009 023 645
- DE-A1-102012 204 526

## Beschreibung

Die Erfindung betrifft ein Befestigungssystem für ein Kraftfahrzeuglichtmodul umfassend eine gewindefurchende Kunststofftechnik-Schraube mit einem ersten Durchmesser und ein Leichtmetall-Bauteil eines Kraftfahrzeuglichtmoduls, wobei das Leichtmetall-Bauteil ein vorgebohrtes Loch aufweist, wobei das vorgebohrte Loch der Kunststofftechnik-Schraube zugeordnet ist und einen zweiten Durchmesser aufweist. Vorzugsweise ist die Kunststofftechnik-Schraube keine trilobulare Schraube.

Im Zusammenhang mit der vorliegenden Erfindung wird unter dem Begriff Kunststoffschraube oder Kunststofftechnik-Schraube eine Metallschraube verstanden, die speziell für den Einsatz in Kunststoffen, wie in thermoplastischen Kunststoffen, also für Kunststofftechnik ausgebildet ist. Solche Schrauben sind aus dem Stand der Technik bekannt und weisen ein Gewinde mit einer speziellen Gewindegeometrie, wie Gewindeschritt Gewindeneigung, usw. auf, die sich von der Gewindegeometrie der Schrauben für Metalltechnik unterscheiden.

Darüber hinaus betrifft die Erfindung einen Schraubverbund umfassend zumindest ein Befestigungssystem der oben genannten Art und zumindest ein weiteres Bauteil, das mit dem Leichtmetall-Bauteil mittels der zumindest einen gewindefurchenden Kunststofftechnik-Schraube verschraubt ist.

Außerdem betrifft die Erfindung ein Kraftfahrzeuglichtmodul, insbesondere Kraftfahrzeugscheinwerfer oder Kraftfahrzeugscheinwerferlichtmodul mit zumindest einem solchen Befestigungssystem und/oder mit einem solchen Schraubverbund.

Weiters betrifft die Erfindung ein Verfahren zum Einschrauben einer gewindefurchenden Kunststofftechnik-Schraube in ein Leichtmetall-Bauteil eines Kraftfahrzeuglichtmoduls, insbesondere eines Kraftfahrzeugscheinwerferlichtmoduls.

Bei aus dem Stand der Technik bekannten Befestigungssystemen werden die Schrauben immer an das Material angepasst, mit dem sie verschraubt werden. Typischerweise werden von Herstellern (RIBE, EJOT, Würth, etc.), die Produkte für Befestigungs- und Montagetechnik entwickeln, unterschiedliche Schrauben angeboten, je nachdem worin - Stahl, Gusseisen, Aluminium, Blech, Magnesium, Kunststoff - die Direktverschraubung stattfinden soll. Allerdings besteht im KFZ-Bau und insbesondere bei Herstellung von Kraftfahrzeuglichtmodulen und/oder Kraftfahrzeugscheinwerfern oft die Notwendigkeit, Bauteile aus grundsätzlich unterschiedlichen Materialien miteinander zu verschrauben. Ein typisches Beispiel ist die Verschraubung einer eine LED-Lichtquelle tragenden Platine mit einem Kühlkörper, wie einem Fließ-/Strangpresskühlkörper beispielsweise aus Aluminium, und mit einem der LED-Lichtquelle vorgelagerten Reflektor, der beispielsweise aus thermoplastischem Kunststoff besteht. Bei Verschraubungen dieser Art stellte sich allerdings heraus, dass die Verwendung von nicht-trilobularen, für Leichtmetalle ausgelegten Schrauben mehrere Nachteile mit sich bringt. Erstens sind speziell für Leichtmetalle ausgelegte Schrauben teuer. Zweitens erzeugen solche Schrauben oft einen zu hohen Druck auf das Kunststoff-Bauteil, z.B. auf die PC-Optik. Dies kann dazu führen, dass die auf diese Art verschraubten Bauteile für Kraftfahrzeugscheinwerferlichtmodule entwickelte Schock- und/oder Wärme-Feuchte-Zyklus-Tests nicht bestehen beziehungsweise nicht prozess-sicher verschraubt werden können. Das Dokument DE102009023645A1 zeigt ein Befestigungssystem des Standes der Technik.

Die Aufgabe der vorliegenden Erfindung besteht darin, die vorgenannten Nachteile des Standes der Technik zu überwinden und eine günstige und prozess-sichere Verschraubung im KFZ-Bau und insbesondere im Bereich der Kraftfahrzeugscheinwerferentwicklung zu ermöglichen.

Die Aufgabe wird mit einem Befestigungssystem der oben genannten Art erfindungsgemäß dadurch gelöst, dass der zweite Durchmesser größer als ein vorgegebener Wert ist, wobei der vorgegebene Wert vorzugsweise größer als der Wert des ersten Durchmessers ist, und der Wert des zweiten Durchmessers zumindest von dem Wert des ersten Durchmessers abhängt, wobei die gewindefurchende Kunststofftechnik-Schraube in das vorgebohrte Loch einschraubbar ist. Dies bedeutet, dass das vorgebohrte Loch für die Kunststofftechnik-Schraube vorgebohrt ist.

Im Zusammenhang mit der vorliegenden Erfindung wird unter dem Begriff "einschraubbar" verstanden, dass die Kunststofftechnik-Schraube in das Leichtmetall-Bauteil, das beispielsweise aus Aluminium oder Aluminium-Legierungen ausgebildet ist, prozesssicher eingeschraubt werden kann, das heißt ohne dass das Leichtmetall-Bauteil oder die Kunststofftechnik-Schraube selbst bricht.

Ein Vorteil der Erfindung besteht darin, dass die Schraube in einem eingeschraubten Zustand auf das Leichtmetall-Bauteil vorzugsweise auf das Leichtmetall-Bauteil und auf ein weiteres Bauteil (siehe unten) keinen übermäßig hohen Druck ausübt, sodass diese brechen/ reißen/ sprengen kann/können.

Es kann mit Vorteil vorgesehen sein, dass der vorgegebene Wert einem Durchmesser gleich ist, den ein für eine gewindefurchende Metalltechnik-Schraube vorgebohrtes Loch aufweist, wobei vorzugsweise der Durchmesser der gewindefurchenden Metalltechnik-Schraube gleich dem ersten Durchmesser der gewindefurchenden Kunststofftechnik-Schraube ist.

Es wird erfindungsgemäß mit Vorteil vorgesehen, dass der zweite Durchmesser aus dem ersten Durchmesser gemäß der Formel D = An + K*(d₀ -1) ermittelt ist, wobei D der Wert des zweiten Durchmessers und d₀ der Wert des ersten Durchmessers ist, der Parameter An zwischen 0,4 mm und 0,5 mm liegt, vorzugsweise genau 0,45 mm beträgt, und der Parameter K zwischen 1,0 und 1,2 liegt, vorzugsweise genau 1,1 beträgt, und der erste Durchmesser in einem Bereich zwischen 1 und 6,5 Millimeter, vorzugsweise zwischen 1 und 6 Millimeter liegt.

Es kann weiters vorgesehen sein, dass das Leichtmetall-Bauteil einen Schraubdom aufweist, in dem das Loch ausgebildet ist.

Außerdem kann mit Vorteil vorgesehen sein, dass das Loch als ein Sackloch oder als ein Durchgangsloch ausgebildet ist.

Bei einer bevorzugten Ausführungsform kann vorgesehen sein, dass das Leichtmetall-Bauteil ein Kühlkörper aus Aluminium beziehungsweise Aluminium-Legierung ist.

Es kann besonders vorteilhaft sein, dass das System ein weiteres Bauteil umfasst, das beispielsweise auf das Leichtmetall-Bauteil auflegbar ist und vorzugsweise aus Leichtmetall oder Kunststoff, beispielsweise thermoplastischem Kunststoff oder Duroplast ausgebildet ist, wobei das weitere Bauteil beispielsweise ein Reflektor ist, wobei das weitere Bauteil ein dem Loch korrespondierendes Bauteil-Loch aufweist, wobei der Durchmesser des Bauteil-Lochs gleich dem zweiten Durchmesser ist, wobei wenn die Kunststofftechnik-Schraube durch das Bauteil-Loch in das Loch - vorzugsweise prozesssicher - einschraubbar ist, das Leichtmetall-Bauteil mit dem weiteren Bauteil formschlüssig verbindbar ist. Die thermoplastischen Kunststoffe - Thermoplaste - sind rissempfindlich, und insbesondere rissempfindlicher als Duroplaste.

Aus vorgenannten rissempfindlichen Kunststoffen können lichttechnisch relevante Bauteile ausgebildet sein und als das vorgenannte weitere Bauteil verwendet werden. Dabei ist es denkbar, dass eine Vorsatzoptik aus Polycarbonat (PC) und ein optisches Trägerteil aus einem Flüssigkristallpolymer (LCP), z.B. ein Vorsatzoptik-Halter ausgebildet sind. Darüber hinaus können Materialien wie PBT-GF30, PET-GF35, PET-GF30 verwendet werden, wobei diese Abkürzungen für mit 30 Gew. % beziehungsweise 35 Gew. % Glasfasern verstärktes Polyethylenterephthalat (PET) beziehungsweise Polybutylenterephthalat (PBT) stehen.

Wie Laboruntersuchungen zeigen, erfüllt das vorgenannte Befestigungssystem, bei dem das Leichtmetall-Bauteil mit dem weiteren Bauteil mittels der Kunststofftechnik-Schrauben direktverschraubt ist, einen Wärme-Feuchte-Zyklus-Test gemäß der Norm IEC 60068-2-38:2009 (deutsche Fassung: DIN EN 60068-2-38:2009). Es wurde festgestellt, dass der zweite Durchmesser mit dem Anzugsdrehmoment zusammenhängt. Bei dem erfindungsgemäßen Befestigungssystem kann somit das Anzugsdrehmoment in kontrollierter Weise durch Variieren (Vergrößern) des zweiten Durchmessers verringert werden, sodass ein vorbestimmter Druck nicht überschritten wird und bei dem weiteren Bauteil, das vorzugsweise aus Kunststoff ist, keine Risse und/oder Brüche bei dem Durchführen der oben genannten Tests entstehen. Dabei wurde das weitere Bauteil aus thermoplastischem Kunststoff getestet. Es ist auch zu erwarten, dass die Tests positiv sind, wenn das weitere Bauteil aus einem Duroplast ausgebildet ist.

Das weitere Bauteil kann aber auch aus Leichtmetall ausgebildet sein. Es kann als ein Blech ausgebildet sein.

Es kann außerdem zweckmäßig sein, wenn das System ferner mehrere, vorzugsweise identisch ausgebildete Kunststofftechnik-Schrauben umfasst, wobei in dem Leichtmetall-Bauteil für jede der mehreren Kunststofftechnik-Schrauben jeweils ein Loch vorgesehen/vorgebohrt ist.

Darüber hinaus kann es zweckdienlich sein, wenn das weitere Bauteil eine der Anzahl der Kunststofftechnik-Schrauben korrespondierende Anzahl von Bauteil-Löchern aufweist. Die Bauteil-Löcher können einander korrespondierende Durchmesser aufweisen.

Es können sich weitere Vorteile ergeben, wenn der Schraubenschaft der gewindefurchenden Kunststofftechnik-Schraube einen runden, vorzugsweise einen kreisrunden Querschnitt, vorzugsweise keine Trilobularität aufweist.

Die vorgenannte Aufgabe wird auch mit einem vorgenannten Kraftfahrzeuglichtmodul, das ferner zumindest eine an dem Leichtmetall-Bauteil angeordnete Lichtquelle umfasst, gelöst. Die Aufgabe wird außerdem mit einem Verfahren der oben genannten Art erfindungsgemäß dadurch gelöst, dass das Verfahren folgende Schritte umfasst:
- Bereitstellen eines Leichtmetall-Bauteils eines Kraftfahrzeuglichtmoduls;
- Bereitstellen einer gewindefurchenden Kunststofftechnik-Schraube mit einem ersten Durchmesser;
- Ermitteln eines zweiten Durchmessers für ein Loch in dem Leichtmetall-Bauteil, wobei der zweite Durchmesser von dem Wert des ersten Durchmessers abhängt und größer als ein vorgegebener Wert ist, wobei der vorgegebene Wert vorzugsweise größer als der Wert des ersten Durchmessers ist;
- Ausbilden eines Lochs in dem Leichtmetall-Bauteil, wobei das Loch den zweiten Durchmesser aufweist.

Es kann zweckdienlich sein, wenn der vorgegebene Wert einem Durchmesser gleich ist, den ein für eine gewindefurchende Metalltechnik-Schraube vorgebohrtes Loch aufweist, wobei vorzugsweise der Durchmesser der gewindefurchenden Metalltechnik-Schraube gleich dem ersten Durchmesser der gewindefurchenden Kunststofftechnik-Schraube ist.

Es wird erfindungsgemäß vorgesehen, dass der zweite Durchmesser aus dem ersten Durchmesser gemäß der Formel D = An + K*(d₀ - 1) ermittelt wird, wobei D der Wert des zweiten Durchmessers und d₀ der Wert des ersten Durchmessers ist, wobei der Parameter An zwischen 0,4 mm und 0,5 mm liegt, vorzugsweise genau 0,45 mm beträgt, und der Parameter K zwischen 1,0 und 1,2 liegt, vorzugsweise genau 1,1 beträgt und der erste Durchmesser in einem Bereich zwischen 1 und 6,5 Millimeter, insbesondere 6 Millimeter liegt.

Es kann zweckmäßig sein, wenn das Loch in dem Leichtmetall-Bauteil durch Fließpressen, Fräsen, Bohren, oder Lasern ausgebildet wird, wenn es ein Sackloch ist, und durch Stanzen, Fräsen, Bohren, oder Lasern ausgebildet wird, wenn es ein Durchgangsloch ist.

Die Erfindung samt weiteren Vorteilen ist im Folgenden an Hand beispielhafter Ausführungsformen näher erläutert, die in der Zeichnung veranschaulicht sind. In dieser zeigt

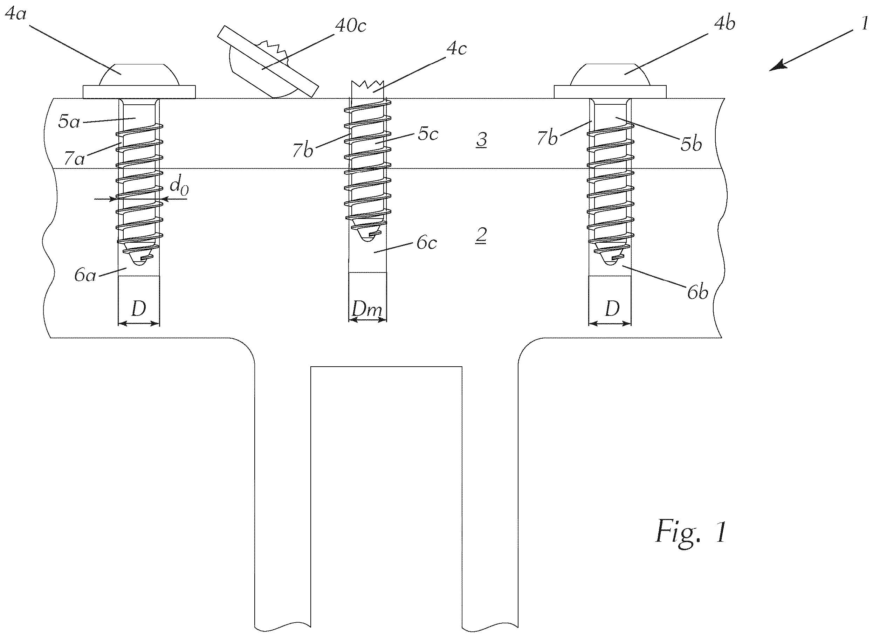

Fig. 1 einen Schraubverbund mit zwei formschlüssig verbundenen Bauteilen, die mit drei Kunststofftechnik-Schrauben verbunden sind, von welchen zwei prozesssicher eingeschraubt wurden und eine gebrochen ist.

Figur 1 lässt ein Schraubverbund 1 mit zwei Bauteilen 2, 3 und drei gewindefurchende Kunststofftechnik-Schrauben **4a, 4b, 4c** erkennen. Der Schraubverbund 1 kann mit einem erfindungsgemäßen Befestigungssystem erreicht werden. Ein erstes Bauteil 2 ist aus einem Leichtmetall, wie Aluminium, z. B. 99,5% Aluminium, oder Aluminium-Legierung ausgebildet und kann dem erfindungsgemäßen Leichtmetall-Bauteil entsprechen. Das zweite Bauteil 3 ist vorzugsweise aus Kunststoff, wie thermoplastischen Kunststoff ausgebildet und kann dem weiteren Bauteil entsprechen. Kunststoffe sind dabei ganz nützlich, weil sie einen besseren Gewindeeingriff ermöglichen. Die Figur 1 lässt erkennen, dass es sich bei dem ersten Bauteil 2 um einen Kühlkörper, beispielsweise um einen Fließpress-Kühlkörper, für ein Kraftfahrzeugscheinwerferlichtmodul handelt. Darüber hinaus ist in Figur 1 zu erkennen, dass das zweite Bauteil 3 als eine Grundplatte ausgebildet ist. Das zweite Bauteil 3 ist natürlich nicht auf eine Grundplatte beschränkt. Sie kann auch als ein optisch relevantes Bauteil, wie Reflektor, Kollimator oder Ähnliches ausgebildet sein. Das zweite Bauteil kann in Befestigungsbereichen, das heißt dort, wo es mit dem ersten Bauteil mittels einer Kunststofftechnik-Schraube 4a, 4b oder 4c verschraubt ist, unterschiedliche Stärke (Dicke) aufweisen.

Die gewindefurchenden Kunststofftechnik-Schrauben 4a, 4b, 4c weisen einen Schraubenschaft **5a, 5b, 5c** mit einem ersten vorgegebenen Durchmesser **d₀** auf. Beispielsweise sind es M3- oder M4-Schrauben, wie Ejomat Delta PT 30x10 oder PT Delta Ejot 40x12. Die gezeigten Kunststofftechnik-Schrauben 4a, ab, 4c sind alle gleich ausgebildet und weisen vor allem den gleichen ersten Durchmesser d₀ auf. Es versteht sich, dass auch unterschiedliche Kunststofftechnik-Schrauben verwendet werden können.

Das erste Bauteil 2 weist vorgebohrte Sacklöcher **6a, 6b, 6c** auf, die den Kunststofftechnik-Schrauben zugeordnet sind und mit vorgebohrten Durchgangslöchern **7a, 7b, 7c** in dem zweiten Bauteil 3 korrespondieren. Die Sacklöcher können beispielsweise zwischen 10 mm und 50 mm tief sein. Vorzugsweise liegt die Einschraubtiefe bei ca. 1cm. Im Allgemeinen ist es bekannt, dass eine Mindesttiefe eines Sacklochs bei einem Schraubdom einen zweifachen Schraubengewinde-Durchmesser plus 0,5 mm Freistellung beträgt, damit die Schraube in den schlimmsten Toleranzfällen nicht im Sackloch ansteht. Die maximale Tiefe des Sacklochs ist normalerweise nicht vorgegeben.

Zwei von den drei gezeigten Löchern 6a und 6b haben gleich großen Durchmesser D, der zu dem erfindungsgemäßen zweiten Durchmesser korrespondieren kann. Das dritte Loch 6c weist einen Durchmesser **Dm** auf, dessen Wert sich von dem Wert des zweiten Durchmessers D unterscheidet - der Durchmesser Dm ist kleiner als der zweite Durchmesser D. Der Durchmesser Dm kann einem erfindungsgemäßen vorgegebenen Wert entsprechen. Der vorgegebene Wert ist vorzugsweise größer als der Wert des ersten Durchmessers d₀.

Der zweite Durchmesser D ist nicht willkürlich ausgewählt sondern hängt von dem ersten Durchmesser d₀ ab. Figur 1 lässt erkennen, dass die Kunststofftechnik-Schrauben 4a und 4b in die korrespondierenden vorgebohrten Löcher 6a und 6b einschraubbar sind. Die dritte Kunststofftechnik-Schraube 4c ist in das ihr korrespondierende Loch 6c nicht einschraubbar, da sie bei einem vorgegebenen Anziehdrehmoment M_{A} bricht oder das Gewinde ausreißt. Figur 1 zeigt eine gebrochene Kunststofftechnik-Schraube 4c, deren Kopf 40c abbrach, als beim Verschrauben das Anziehdrehmoment M_{A} erreicht wurde. Die eingeschraubten Kunststofftechnik-Schrauben 4a und 4b hingegen sorgen für eine formschlüssige Verbindung der zwei Bauteile 2 und 3. Somit zeigt die Figur 1 zwei Befestigungssysteme, die dem erfindungsgemäßen System entsprechen - die Schrauben sind in Takt, und ein System, dass einem herkömmlichen System entspricht - die Schraube ist gebrochen. Es ist zwar nicht ausgeschlossen, dass ein Schraubverbund, der einem erfindungsgemäßen Schraubverbund entspricht, Befestigungssysteme nach dem Stand der Technik umfasst (gebrochene Schrauben), doch ist es von Vorteil, wenn der Schraubverbund nur mittels erfindungsgemäßer Befestigungssysteme verbunden ist.

Der Durchmesser Dm kann einem Loch-Durchmesser gleich sein, den ein für eine gewindefurchende Metalltechnik-Schraube vorgebohrtes Loch aufweist beziehungsweise aufweisen soll, wobei vorzugsweise der Durchmesser der gewindefurchenden Metalltechnik-Schraube gleich dem ersten Durchmesser d₀ der gewindefurchenden Kunststofftechnik-Schraube 4a, 4b ist. Es ist bekannt, dass einer bestimmten Schraube beziehungsweise einem bestimmten Schrauben-Typ (Kunststofftechnik-Schraube, Metalltechnik-Schraube usw.) vom Hersteller eine Loch-Geometrie vorgeschrieben wird, die an dieser Schraube beziehungsweise an diesen Schrauben-Typ angepasst ist. Eine vorgeschriebene/vorgegebene Loch-Geometrie kann auch vom Typ des Lochs - Loch in einem Schraubdom, ein Durchgangsloch, ein Sackloch usw. - abhängen.

Der Schraubenschaft 5a, 5b, 5c der gewindefurchenden Kunststofftechnik-Schrauben 4a, 4b, 4c weist vorzugsweise einen runden, insbesondere einen kreisrunden Querschnitt auf. Die Kunststofftechnik-Schrauben 4a, 4b, 4c sind keine trilobularen Schrauben. Die trilobularen Schrauben sind in der Anschaffung zu teuer.

Wie bereits erwähnt, kann das erste Bauteil 2 als ein Kühlkörper und das zweite Bauteil 3 als ein optisch relevantes Bauteil, wie ein Reflektor, ein Kollimator oder eine Lichtquellen, beispielsweise halbleiterbasierte Lichtquellen, wie LED-Lichtquellen tragende Platine ausgebildet sein. Somit kann der Schraubverbund 1 in einem Kraftfahrzeugscheinwerferlichtmodul eingesetzt werden. Dabei werden die Teile des Kraftfahrzeugscheinwerferlichtmoduls mit den Kunststofftechnik-Schrauben 4a, 4b verschraubt, wobei sie vor dem Verschrauben vorgebohrt werden und die vorgebohrten Löcher jeweils einen oben beschriebenen zweiten Durchmesser D aufweisen. Vorzugsweise ist der Durchmesser D gleich. Es versteht sich, dass auch unterschiedliche Durchmesser in Frage kommen, vor allem, wenn Schraubendurchmesser unterschiedlich sind.

Erfindungsgemäß wird der Durchmesser D der Sacklöcher 6a, 6b sowie der Durchgangslöcher 7a, 7b für Kunststofftechnik-Schrauben mit einem Schrauben-Durchmesser d₀ von 1 bis 6mm aus dem Schrauben-Durchmesser d₀ gemäß der Formel D = An + K*(d₀ -1) ermittelt. Der Parameter An wird empirisch ermittelt und liegt vorzugsweise zwischen 0,4 mm und 0,5 mm. Vorzugsweise beträgt der Parameter An genau 0,45 mm. Der Parameter K wird ebenfalls empirisch ermittelt und liegt zwischen 1,0 und 1,2. Vorzugsweise beträgt der Parameter K genau 1,1. Mit einem gemäß der vorgenannten Formel ermittelten Loch-Durchmesser D wird die Wahrscheinlichkeit eines prozesssicheren Verschraubens erhöht. Nachstehend wird auf ein Beispiel eines Verfahrens Bezug genommen, mit dem beispielsweise der oben beschriebene Schraubverbund aus einem dem erfindungsgemäßen Befestigungssystem entsprechenden Befestigungssystem geschaffen werden kann.

In einem ersten Schritt des Verfahrens wird das erste Bauteil 2 und das zweite Bauteil 3 bereitgestellt. In einem zweiten Schritt des Verfahrens werden die gewindefurchenden Kunststofftechnik-Schrauben 4a, 4b, 4c mit dem Durchmesser d₀ bereitgestellt.

In einem dritten Schritt wird der zweite Durchmesser D für ein Loch in dem ersten und dem zweiten Bauteil 2, 3 in Abhängigkeit von dem ersten Durchmesser d₀ ermittelt. Der ermittelte Wert von dem zweiten Durchmesser D hat eine Genauigkeit von ±0,05 mm.

In einem vierten Schritt werden den zweiten Durchmesser D aufweisende Sacklöcher 6a, 6b in dem ersten Bauteil 2 und den zweiten Durchmesser D aufweisende Durchgangslöcher 7a, 7b in dem zweiten Bauteil 3 ausgebildet. Die Sacklöcher 6a, 6b werden vorzugsweise durch Fließpressen, Fräsen, Bohren oder Lasern und die Durchgangslöcher 7a, 7b vorzugsweise durch Stanzen, Fräsen, Bohren oder Lasern ausgebildet.

In einem weiteren Schritt können die Bauteile 2, 3 mittels Kunststofftechnik-Schrauben 4a und 4b prozess-sicher direktverschraubt werden.

Erfindungsgemäß wird der zweite Durchmesser D gemäß der oben beschriebenen Formel in Abhängigkeit von dem ersten Durchmesser d₀ ermittelt. Der zweite Durchmesser D zum prozesssicheren Direktverschrauben kann auch empirisch ermittelt werden. In einer nachstehend beschriebenen Untersuchung wurde ein Aluminium-Fließpress-Kühlkörper mit 99,5 % Aluminium mit einer 10 mm starken Grundplatte aus Polycarbonat (PC) direktverschraubt. Dabei wurden zwei Arten von Kunststofftechnik-Schrauben (Ejomat Delta PT 30 x 10 und PT Delta Ejot 40 x 12) verwendet und der Loch-Durchmesser D - also der zweite Durchmesser - variiert. Das Eindrehen der Kunststofftechnik-Schrauben geschah mit etwa 60 U/Min. Die Ejomat-Delta-PT-30x10- und die PT-Delta-Ejot-40x12-Schrauben wurden in die Löcher mit den Durchmessern von 2,4mm, 2,5mm, 2,6mm, 2,7mm, 2,8mm beziehungsweise von 3,4mm, 3,5mm, 3,6mm, 3,7mm, 3,8mm eingeschraubt und mittels einer Drehmoment-Messeinrichtung Eindreh-, Überdreh- sowie Anziehdrehmoment ermittelt. Die Drehmoment-Messeinrichtung kann dabei einen Elektroschrauber, wie ein ECS10 und eine Messwertaufnahme-Vorrichtung, beispielsweise einen Schatz GX Messkoffer mit Messmittel umfassen. Sobald der Schraubenkopf (auf dem ersten Bauteil 2 beziehungsweise auf dem zweiten Bauteil 3) aufliegt, wird eine Vorspannkraft erzeugt und das Drehmoment steigt sprunghaft an. Der Wert des Eindrehmoments vor dem sprunghaften Anstieg wird als Eindrehmoment bezeichnet. Beim Erreichen des Überdrehmoments bricht entweder der Kopf der Schraube ab oder die Schraube selbst dreht durch, wodurch das Gewinde ausreißt. Das Anziehdrehmoment kann beispielsweise als Mittelwert zwischen dem Überdreh- und dem Eindrehmoment festgelegt werden. Die Vorspannkraft steigt mit dem steigenden Drehmoment an.

Darüber hinaus wurde das Anziehdrehmoment untersucht, um seinen optimalen Wert insbesondere in Hinblick auf den vorgenannten Wärme-Feuchte-Zyklus zu ermitteln. Der optimale Wert des Anziehdrehmoments kann von dem oben genannten Mittelwert abweichen und stellt einen Kompromiss zwischen einem ausreichenden Anziehdrehmoment, das für eine ausreichende Vorspannkraft sorgt, und einem maximalen Anziehdrehmoment, bei dem eine Vorspannkraft erzeugt wird, bei der das weitere Bauteil, beispielsweise eine Kunststoffoptik, gerade noch nicht zerstört wird, dar. Dies ist insbesondere für den Wärme-Feuchte-Zyklus-Test relevant. Unter einer ausreichenden Vorspannkraft wird eine Vorspannkraft verstanden, die durch ein Anziehdrehmoment entsteht, das zwischen dem Überdreh- und dem Eindrehmoment liegt und welches Anziehdrehmoment vorzugsweise der Mittelwert zwischen dem Überdreh- und dem Eindrehmoment ist.

Dabei konnten bei einem Anziehdrehmoment von 1,2 Nm mittlere Vorspankräfte im Bereich von 0,19 KN, bei einem Anziehdrehmoment von 1,4 Nm im Bereich von 0,39 KN und bei einem Anziehdrehmoment von 1,6 Nm im Bereich von 0,5 KN gemessen werden.

Die Aufgabe der vorstehenden Beschreibung besteht lediglich darin, veranschaulichende Beispiele bereitzustellen und weitere Vorteile und Besonderheiten der vorliegenden Erfindung anzugeben. Die vorstehende Beschreibung kann somit nicht als Einschränkung des Anwendungsgebiets der Erfindung beziehungsweise der in den Ansprüchen beanspruchten Patentrechte interpretiert werden.

Die Bezugsziffern in den Ansprüchen dienen lediglich zum besseren Verständnis der vorliegenden Erfindungen und bedeuten auf keinen Fall eine Beschränkung der vorliegenden Erfindungen.

## Patentansprüche

1. Befestigungssystem (1) umfassend eine gewindefurchende Kunststofftechnik-Schraube (4a, 4b) mit einem ersten Durchmesser (d₀) und ein Kraftfahrzeuglichtmodul, umfassend ein Leichtmetall-Bauteil (2), wobei das Leichtmetall-Bauteil (2) ein vorgebohrtes Loch (6a, 6b) aufweist, wobei das vorgebohrte Loch (6a, 6b) der Kunststofftechnik-Schraube (4a, 4b) zugeordnet ist und einen zweiten Durchmesser (D) aufweist, wobei der zweite Durchmesser (D) größer als ein vorgegebener Wert ist und der Wert des zweiten Durchmessers (D) zumindest von dem Wert des ersten Durchmessers (d₀) abhängt, wobei die gewindefurchende Kunststofftechnik-Schraube (4a, 4b) in das vorgebohrte Loch (6a, 6b) einschraubbar ist, wobei der zweite Durchmesser (D) aus dem ersten Durchmesser (d0) gemäß der Formel D = An + K*(d0 -1) ermittelt ist, wobei D der Wert des zweiten Durchmessers ist, d0 der Wert des ersten Durchmessers ist, der Parameter An zwischen 0,4 mm und 0,5 mm liegt, vorzugsweise genau 0,45 mm beträgt, und der Parameter K zwischen 1,0 und 1,2 liegt, vorzugsweise genau 1,1 beträgt, und der erste Durchmesser (d0) in einem Bereich zwischen 1 und 6 Millimeter liegt.

2. System nach Anspruch 1, wobei der vorgegebene Wert einem Durchmesser (Dm) gleich ist, den ein für eine gewindefurchende Metalltechnik-Schraube vorgebohrtes Loch (6c) aufweist, wobei vorzugsweise der Durchmesser der gewindefurchenden Metalltechnik-Schraube gleich dem ersten Durchmesser (d₀) der gewindefurchenden Kunststofftechnik-Schraube (4a, 4b) ist.

3. System nach einem der Ansprüche 1 bis 2, wobei das Leichtmetall-Bauteil (2) einen Schraubdom aufweist in dem das Loch (6a, 6b) ausgebildet ist.

4. System nach einem der Ansprüche 1 bis 3, wobei das Loch (6a, 6b) als ein Sackloch oder als ein Durchgangsloch ausgebildet ist.

5. System nach einem der Ansprüche 1 bis 4, wobei das Leichtmetall-Bauteil (2) ein Kühlkörper aus Aluminium ist.

6. System nach einem der Ansprüche 1 bis 5, wobei das System ein weiteres Bauteil (3) umfasst, das vorzugsweise aus Leichtmetall oder Kunststoff, beispielsweise aus thermoplastischem Kunststoff, wie Duroplast ausgebildet ist, wobei das weitere Bauteil (3) beispielsweise ein Reflektor ist, wobei das weitere Bauteil (3) ein dem Loch (6a, 6b) korrespondierendes Bauteil-Loch (7a, 7b) aufweist, wobei der Durchmesser des Bauteil-Lochs (7a, 7b) gleich dem zweiten Durchmesser (D) ist, wobei wenn die Kunststofftechnik-Schraube (4a, 4b) durch das Bauteil-Loch (7a, 7b) in das Loch (6a, 6b), vorzugsweise prozesssicher, einschraubbar ist, das Leichtmetall-Bauteil (2) mit dem weiteren Bauteil (3) formschlüssig verbindbar ist.

7. System nach einem der Ansprüche 1 bis 6, ferner umfassend mehrere, vorzugsweise identisch ausgebildete Kunststofftechnik-Schrauben (4a, 4b), wobei in dem Leichtmetall-Bauteil (2) für jede der mehreren Kunststofftechnik-Schrauben (4a, 4b) jeweils ein Loch (6a, 6b) vorgesehen ist.

8. System nach Anspruch 6 und 7, wobei das weitere Bauteil (3) eine der Anzahl der Kunststofftechnik-Schrauben korrespondierende Anzahl von Bauteil-Löchern (7a, 7b) aufweist.

9. System nach einem der Ansprüche 1 bis 8, wobei der Schraubenschaft (5a, 5b) der gewindefurchenden Kunststofftechnik-Schraube (4a, 4b) einen runden, vorzugsweise einen kreisrunden Querschnitt aufweist.

10. Schraubverbund umfassend zumindest ein Befestigungssystem nach einem der Ansprüche 1 bis 9 und zumindest ein weiteres Bauteil (3), wobei das zumindest eine weitere Bauteil (3) vorzugsweise aus Leichtmetall oder Kunststoff, beispielsweise aus thermoplastischem Kunststoff, wie Duroplast ausgebildet ist, wobei das zumindest eine weitere Bauteil (3) beispielsweise ein Reflektor ist, wobei das zumindest eine weitere Bauteil (3) zumindest ein dem Loch (6a, 6b) korrespondierendes Bauteil-Loch (7a, 7b) aufweist, wobei der Durchmesser des Bauteil-Lochs (7a, 7b) gleich dem zweiten Durchmesser (D) ist, wobei wenn die Kunststofftechnik-Schraube (4a, 4b) durch das Bauteil-Loch (7a, 7b) in das Loch (6a, 6b), vorzugsweise prozesssicher, eingeschraubt ist, das Leichtmetall-Bauteil (2) mit dem zumindest einen weiteren Bauteil (3) formschlüssig verbunden ist.

11. Kraftfahrzeuglichtmodul, insbesondere Kraftfahrzeugscheinwerfer mit zumindest einem System nach einem der Ansprüche 1 bis 9 und/oder zumindest einem Schraubverbund nach Anspruch 10, welches Kraftfahrzeuglichtmodul vorzugsweise zumindest eine an dem Leichtmetall-Bauteil (2) angeordnete Lichtquelle umfasst.

12. Verfahren zum Einschrauben einer gewindefurchenden Kunststofftechnik-Schraube (4a, 4b) in ein Leichtmetall-Bauteil (2) eines Kraftfahrzeuglichtmoduls, insbesondere eines Kraftfahrzeugscheinwerferlichtmoduls, umfassend folgende Schritte:
- Bereitstellen eines Kraftfahrzeuglichtmoduls umfassend ein Leichtmetall-Bauteil (2);
- Bereitstellen einer gewindefurchenden Kunststofftechnik-Schraube (4a, 4b) mit einem ersten Durchmesser (d₀);
- Ermitteln eines zweiten Durchmessers (D) für ein Loch (6a, 6b) in dem Leichtmetall-Bauteil (2), wobei der zweite Durchmesser (D) von dem Wert des ersten Durchmessers (d₀) abhängt und größer als ein vorgegebener Wert ist;
- Ausbilden eines Lochs (6a, 6b) in dem Leichtmetall-Bauteil (2), wobei das Loch (6a, 6b) den zweiten Durchmesser (D) aufweist, wobei der zweite Durchmesser (D) aus dem ersten Durchmesser gemäß der Formel D = An + K*(d0 -1) ermittelt wird, wobei D der Wert des zweiten Durchmessers und d0 der Wert des ersten Durchmessers ist, wobei der Parameter An zwischen 0,4 mm und 0,5 mm liegt, vorzugsweise genau 0,45 mm beträgt, und der Parameter K zwischen 1,0 und 1,2 liegt, vorzugsweise genau 1,1 beträgt und der erste Durchmesser in einem Bereich zwischen 1 und 6 Millimeter liegt.

13. Verfahren nach Anspruch 12, wobei der vorgegebene Wert einem Durchmesser (Dm) gleich ist, den ein für eine gewindefurchende Metalltechnik-Schraube vorgebohrtes Loch (6c) aufweist, wobei vorzugsweise der Durchmesser der gewindefurchenden Metalltechnik-Schraube gleich dem ersten Durchmesser (d₀) der gewindefurchenden Kunststofftechnik-Schraube (4a, 4b) ist.

## Claims

1. Fastening system (1) comprising a thread-forming plastic engineering screw (4a, 4b) having a first diameter (d0) and a motor vehicle light module comprising a light metal component (2), said light metal component (2) having a pre-drilled hole (6a, 6b), said pre-drilled hole (6a, 6b) being associated with the plastic engineering screw (4a, 4b) and having a second diameter (D), the second diameter (D) being greater than a predetermined value and the value of the second diameter (D) depending at least on the value of the first diameter (d0) wherein the thread-forming plastic engineering screw (4a, 4b) can be screwed into the predrilled hole (6a, 6b), wherein the second diameter (D) is determined from the first diameter (d0) in accordance with the formula D = An + K* (d0 - 1), wherein D is the value of the second diameter d0 is the value of the first diameter, the parameter An is between 0.4 mm and 0.5 mm, preferably exactly 0.45 mm, and the parameter K is between 1.0 and 1.2, preferably exactly 1.1, and the first diameter (d0) is in a range between 1 and 6 millimeters.

2. System according to claim 1, wherein the predetermined value is equal to a diameter (Dm) that a hole (6c) pre-drilled for a thread-forming metal-engineering screw has, preferably the diameter of the thread-forming metal-engineering screw is equal to the first diameter (d0) of the thread-forming plastic-engineering screw (4a, 4b).

3. System according to any one of claims 1 to 2, wherein the light metal component (2) comprises a screw dome in which the hole (6a, 6b) is formed.

4. System according to any one of claims 1 to 3, wherein the hole (6a, 6b) is formed as a blind hole or as a through hole.

5. System according to any one of claims 1 to 4, wherein the light metal component (2) is a heat sink made of aluminum.

6. System according to any one of claims 1 to 5, wherein the system comprises a further component (3) preferably formed of light metal or plastic, for example thermoplastic plastic, such as thermoset, wherein the further component (3) is for example a reflector, wherein the further component (3) has a component hole (7a, 7b), wherein the diameter of the component hole (7a, 7b) is equal to the second diameter (D), wherein when the plastics engineering screw (4a, 4b) can be screwed through the component hole (7a, 7b) into the hole (6a, 6b), preferably in a process-safe manner, the light metal component (2) can be positively connected to the further component (3).

7. System according to any one of claims 1 to 6, further comprising a plurality of plastic engineering screws (4a, 4b), preferably of identical design, a hole (6a, 6b) being provided in the light metal component (2) for each of the plurality of plastic engineering screws (4a, 4b).

8. System according to claims 6 and 7, wherein the further component (3) has a number of component holes (7a, 7b) corresponding to the number of plastic engineering screws.

9. System according to any one of claims 1 to 8, wherein the screw shank (5a, 5b) of the thread-forming plastic engineering screw (4a, 4b) has a round, preferably a circular cross-section.

10. Screw assembly comprising at least one fastening system according to any one of claims 1 to 9 and at least one further component (3), wherein the at least one further component (3) is preferably formed of light metal or plastic, for example thermoplastic plastic, such as thermoset, wherein the at least one further component (3) is, for example, a reflector, wherein the at least one further component (3) has at least one component corresponding to the hole (6a, 6b), wherein the diameter of the component hole (7a, 7b) is equal to the second diameter (D), wherein when the plastic engineering screw (4a, 4b) is screwed through the component hole (7a, 7b) into the hole (6a, 6b), preferably in a process-safe manner, the light metal component (2) is positively connected to the at least one further component (3).

11. Motor vehicle light module, in particular motor vehicle headlamp with at least one system according to one of claims 1 to 9 and/or at least one screw-in composite according to claim 10, which motor vehicle light module preferably comprises at least one light source arranged on the light metal component (2).

12. Method for screwing a thread-forming plastic engineering screw (4a, 4b) into a light metal component (2) of a motor vehicle light module, in particular a motor vehicle headlamp light module, comprising the following steps:
- Providing a motor vehicle light module comprising a light metal component (2);
- Providing a thread-forming plastic engineering screw (4a, 4b) having a first diameter (d0);
- determining a second diameter (D) for a hole (6a, 6b) in the light metal component (2), the second diameter (D) being dependent on the value of the first diameter (d0) and being greater than a predetermined value;
- forming a hole (6a, 6b) in said light metal component (2), said hole (6a, 6b) having said second diameter (D), said second diameter (D) being determined from said first diameter according to the formula D = An + K* (d0 - 1), where D is the value of said second diameter and d0 is the value of said first diameter, wherein the parameter An is between 0.4 mm and 0.5 mm, preferably exactly 0.45 mm, and the parameter K is between 1.0 and 1.2, preferably exactly 1.1, and the first diameter is in a range between 1 and 6 millimeters.

13. Method according to claim 12, wherein the predetermined value is equal to a diameter (Dm) that a hole (6c) pre-drilled for a thread-forming metal-engineering screw has, preferably the diameter of the thread-forming metal-engineering screw is equal to the first diameter (d0) of the thread-forming plastic-engineering screw (4a, 4b).

## Revendications

1. Système de fixation (1) comprenant une vis technique filetée en plastique (4a, 4b) avec un premier diamètre (d0) et un module d'éclairage de véhicule automobile comprenant un composant en métal léger (2), le composant en métal léger (2) présentant un trou prépercé (6a, 6b), le trou prépercé (6a, 6b) est associé à la vis de technique plastique (4a, 4b) et présente un deuxième diamètre (D), le deuxième diamètre (D) étant supérieur à une valeur prédéterminée et la valeur du deuxième diamètre (D) dépendant au moins de la valeur du premier diamètre (d0), la vis de technique plastique à filetage (4a, 4b) pouvant être vissée dans le trou prépercé (6a, 6b), le deuxième diamètre (D) étant déterminé à partir du premier diamètre (d0) selon la formule D = An + K*(d0 - 1), D étant la valeur du deuxième diamètre, d0 est la valeur du premier diamètre, le paramètre An est compris entre 0,4 mm et 0,5 mm, de préférence est exactement égal à 0,45 mm, et le paramètre K est compris entre 1,0 et 1,2, de préférence est exactement égal à 1,1, et le premier diamètre (d0) est compris dans une plage allant de 1 à 6 millimètres.

2. Système selon la revendication 1, dans lequel la valeur prédéterminée est égale à un diamètre (Dm) que présente un trou (6c) prépercé pour une vis autotaraudeuse de technologie métallique, de préférence le diamètre de la vis autotaraudeuse de technologie métallique étant égal au premier diamètre (d0) de la vis autotaraudeuse de technologie plastique (4a, 4b).

3. Système selon l'une des revendications 1 à 2, dans lequel la pièce en métal léger (2) présente un dôme de vissage dans lequel est formé le trou (6a, 6b).

4. Système selon l'une des revendications 1 à 3, dans lequel le trou (6a, 6b) est un trou borgne ou un trou traversant.

5. Système selon l'une des revendications 1 à 4, dans lequel le composant en métal léger (2) est un dissipateur thermique en aluminium.

6. Système selon l'une des revendications 1 à 5, dans lequel le système comprend un autre composant (3), de préférence en métal léger ou en matière plastique, par exemple en matière thermoplastique, telle que de la résine thermodurcissable, l'autre composant (3) étant par exemple un réflecteur, l'autre composant (3) ayant un trou de composant (7a, 7b), le diamètre du trou de composant (7a, 7b) étant égal au deuxième diamètre (D), dans lequel, lorsque la vis de technique plastique (4a, 4b) peut être vissée à travers le trou de composant (7a, 7b) dans le trou (6a, 6b), de préférence de manière sûre pour le processus, le composant en métal léger (2) peut être assemblé par complémentarité de forme avec l'autre composant (3).

7. Système selon l'une des revendications 1 à 6, comprenant en outre plusieurs vis de technique plastique (4a, 4b), de préférence de forme identique, un trou (6a, 6b) étant prévu dans la pièce en métal léger (2) pour chacune des plusieurs vis de technique plastique (4a, 4b).

8. Système selon les revendications 6 et 7, dans lequel l'autre composant (3) présente un nombre de trous de composant (7a, 7b) correspondant au nombre de vis de technique plastique.

9. Système selon l'une des revendications 1 à 8, dans lequel la tige de vis (5a, 5b) de la vis de technique plastique (4a, 4b) à filetage présente une section transversale ronde, de préférence circulaire.

10. Assemblage vissé comprenant au moins un système de fixation selon l'une des revendications 1 à 9 et au moins un autre composant (3), ledit au moins un autre composant (3) étant de préférence réalisé en métal léger ou en matière plastique, par exemple en matière thermoplastique, telle que de la résine thermodurcissable, ledit au moins un autre composant (3) étant par exemple un réflecteur, ledit au moins un autre composant (3) comportant au moins un trou (6a, 6b), le diamètre du trou de composant (7a, 7b) étant égal au deuxième diamètre (D), lorsque la vis de technique plastique (4a, 4b) est vissée à travers le trou de composant (7a, 7b) dans le trou (6a, 6b), de préférence de manière sûre pour le processus, le composant en métal léger (2) est relié par engagement positif à l'au moins un autre composant (3).

11. Module d'éclairage de véhicule automobile, en particulier projecteur de véhicule automobile avec au moins un système selon l'une des revendications 1 à 9 et/ou au moins un assemblage vissé selon la revendication 10, lequel module d'éclairage de véhicule automobile comprend de préférence au moins une source lumineuse disposée sur le composant en métal léger (2).

12. Procédé de vissage d'une vis de technique plastique (4a, 4b) à filetage dans un composant en métal léger (2) d'un module d'éclairage de véhicule automobile, en particulier d'un module d'éclairage de phare de véhicule automobile, comprenant les étapes suivantes :
- Préparation d'un module d'éclairage de véhicule automobile comprenant un composant en métal léger (2) ;
- Mise à disposition d'une vis technique en matière plastique (4a, 4b) avec un premier diamètre (d0) ;
- déterminer un deuxième diamètre (D) pour un trou (6a, 6b) dans le composant en métal léger (2), le deuxième diamètre (D) dépendant de la valeur du premier diamètre (d0) et étant supérieur à une valeur prédéterminée ;
- former un trou (6a, 6b) dans l'élément en métal léger (2), le trou (6a, 6b) ayant le deuxième diamètre (D), le deuxième diamètre (D) étant déterminé à partir du premier diamètre selon la formule D = An + K* (d0 - 1), où D est la valeur du deuxième diamètre et d0 est la valeur du premier diamètre, le paramètre An étant compris entre 0,4 mm et 0,5 mm, de préférence égal à 0,45 mm exactement, et le paramètre K étant compris entre 1,0 et 1,2, de préférence égal à 1,1 exactement, et le premier diamètre étant compris dans une plage allant de 1 à 6 millimètres.

13. Procédé selon la revendication 12, dans lequel la valeur prédéterminée est égale à un diamètre (Dm) que présente un trou (6c) prépercé pour une vis autotaraudeuse à technologie métallique, de préférence le diamètre de la vis autotaraudeuse à technologie métallique étant égal au premier diamètre (d0) de la vis autotaraudeuse à technologie plastique (4a, 4b).
